Europäisches Patentamt

European Patent Office

Office européen des brevets

(11) Veröffentlichungsnummer: **0 218 595**
**B1**

(12) **EUROPÄISCHE PATENTSCHRIFT**

(45) Veröffentlichungstag der Patentschrift:
26.07.89

(51) Int. Cl.⁴: **A 21 B 3/04, A 21 B 1/24**

(21) Anmeldenummer: **85904058.6**

(22) Anmeldetag: **08.08.85**

(86) Internationale Anmeldenummer:
**PCT/AT 85/00023**

(87) Internationale Veröffentlichungsnummer:
**WO 86/01077 (27.02.86 Gazette 86/5)**

(54) **BACKOFEN.**

(30) Priorität: **08.08.84 AT 2576/84**

(43) Veröffentlichungstag der Anmeldung:
**22.04.87 Patentblatt 87/17**

(45) Bekanntmachung des Hinweises auf die Patenterteilung:
**26.07.89 Patentblatt 89/30**

(84) Benannte Vertragsstaaten:
**DE FR GB IT**

(56) Entgegenhaltungen:
**DE-A- 2 628 430**
**FR-A- 1 175 501**
**FR-A- 2 516 351**
**GB-A- 2 129 269**
**US-A- 4 029 463**

(73) Patentinhaber: **KÖNIG, Helmut, Ursprungweg 70-72,
A-8045 Graz (AT)**

(72) Erfinder: **KÖNIG, Helmut, Ursprungweg 70-72,
A-8045 Graz (AT)**

(74) Vertreter: **Brauneiss, Leo, Dipl.-Ing et al, Patentanwälte
Dipl.-Ing. Peter Boeckmann, Dipl.-Ing. Leo Brauneiss
Dipl.-Ing.Dr. Helmut Wildhack Strohgasse 10,
A-1030 Wien (AT)**

## Beschreibung

Die Erfindung bezieht sich auf einen Backofen mit einem Backraum, in den ein das Backgut auf Auflagen, insbesondere Backblechen, tragender Wagen einschiebbar ist, der während des Backprozesses stillsteht, wobei sich beiderseits des Backraumes Luftkanäle von oben nach unten über die Höhe des Backraumes erstrecken, die durch Zwischenwände vom Backraum getrennt sind und in denen von horizontalen Schlitzen gebildete Luftdurchtrittsöffnungen vorgesehen sind, durch die erwärmte Luft mittels eines Gebläses in den Backraum eingeblasen wird, wobei in der Einschubstellung des Wagens an die Schlitze diesen zugeordnete Kanäle am Wagen anschließen, die von zusätzlich zu den Auflagen vorgesehenen Leitblechen begrenzt sind, durch welche Kanäle die aus den Schlitzen in den Backraum eingeblasene Luft gegen die Wagenmitte zu geleitet wird.

Bei den meisten Backöfen, bei welchen die Luftzufuhr zum Backraum über seitliche Luftkanäle derart erfolgt, daß die Luft durch die Schlitze der Zwischenwände in den Backraum eintritt und sich dort verteilt, tritt der Nachteil auf, daß das über die Auflagen des Wagens verteilte Backgut nicht gleichmäßig ausgebacken wird. Untersuchungen haben gezeigt, daß die Ursache hierfür darin zu suchen ist, daß die über jeweils einen der beiden Luftkanäle zugeführte Warmluft zwar mit hoher Geschwindigkeit aus den Luftdurchtrittsöffnungen austritt, diese Geschwindigkeit jedoch rasch verliert und daher nur mit geringer und überdies — gesehen über den Querschnitt des Backraumes — ungleichmäßiger Geschwindigkeit zum Backgut gelangt.

Bei einem Backofen der eingangs beschriebenen Art (DE-A-2 629 430) sind abweichend von der sonst üblichen Bauweise horizontale Kanäle am Wagen unterhalb der Backbleche vorgesehen, welche von Luftkanal zu Luftkanal durchlaufen, so daß die Luft mit dem Backgut nicht in unmittelbare Berührung gelangt. Dies ist aber für manche Backgutsorten nachteilig, bei welchen eine direkte Beaufschlagung des Backgutes mit der Warmluft gewünscht ist.

Die Erfindung setzt sich zur Aufgabe, die beschriebenen Nachteile zu vermeiden und die Warmluftzufuhr zum Backgut derart zu verbessern, daß die Warmluft mit hoher Geschwindigkeit dem vom Wagen getragenen Backgut zugeführt wird, so daß das Wärmeangebot an das Backgut überall im Backraum gleichmäßig ist. Die Erfindung löst diese Aufgabe — ausgehend von der eingangs beschriebenen bekannten Konstruktion — dadurch, daß die in alternierender Richtung in den Backraum eingeblasene Luft durch die gegen die Wagenmitte zu gewendeten Enden der Kanäle auf das Backgut geleitet wird. Jeder dieser Kanäle schließt in der Einschubstellung des Wagens gleichsam an die benachbarte Luftdurchtrittsöffnung der Zwischenwand an, so daß die durch diese Öffnung gegen den Backraum eingeblasene Luft zumindest zum wesentlichen Teil in diesen Kanal eintritt und daher, entsprechende Bemessung des Querschnittes dieses Kanals vorausgesetzt, nicht wesentlich an Geschwindigkeit verliert, bis sie durch das der Wagenmitte zugewendete Ende des Kanals, welches daher im Bereiche des Mittelabschnittes des Wagens liegt, zum Backgut gelangt. Zum Unterschied von der vorstehend beschriebenen bekannten Konstruktion laufen daher bei dem erfindungsgemäßen Backofen die Kanäle nicht von Luftkanal zu Luftkanal durch, sondern erstrecken sich nur über einen Teil der von Luftkanal zu Luftkanal gemessenen Breite des Backofens, so daß die Luftzufuhr zum Backgut vorwiegend vom Mittelbereich des Wagens aus erfolgt, wo die Luft aus den Kanalenden mit im wesentlichen unverminderter Geschwindigkeit austritt. Überraschenderweise hat es sich gezeigt, daß hierdurch im Zusammenhang mit der alternierenden Luftstromrichtung eine gleichmäßige Beaufschlagung des Backgutes mit Heißluft erzielt wird, so daß das Backgut gleichmäßig ausgebacken wird, auch wenn die Luftdurchtrittsöffnungen weniger gleichmäßig über die Fläche der Zwischenwände verteilt werden, als dies bisher üblich war. Es genügt nämlich im Sinne der Erfindung, nur dort schlitzförmige Luftdurchtrittsöffnungen anzuordnen, wo die erwähnten Kanäle des Wagens ansetzen. Zusätzliche, zwischen den Kanälen angeordnete Luftdurchtrittsöffnungen in den Zwischenwänden bringen nichts.

Vorzugsweise ist erfindungsgemäß jeweils ein Schlitz knapp unterhalb der Auflage angeordnet, wobei der Wagen unterhalb jedes Schlitzes ein liegendes Leitblech trägt, welches zusammen mit der über ihm liegenden Auflage einen der Kanäle begrenzt. Dadurch bildet jede Auflage eine Wand eines Kanals, was eine Einsparung an Material bedeutet und überdies den Vorteil hat, daß die Kanäle knapp unterhalb der Auflagen verlaufen, so daß die in den Kanälen strömende Warmluft die metallischen Auflagen (Backbleche) für die auszubackenden Teigstücke wirksam erwärmt und zugleich die Luft auf die im betreffenden Abteil des Wagens befindlichen Teigstücke von oben her aufgeblasen wird.

Gemäß einer Weiterbildung der Erfindung erstrecken sich das Leitblech und die Auflage in Strahlrichtung des aus dem Schlitz austretenden Luftstrahles parallel zueinander und horizontal. Dadurch bleibt der Querschnitt des Kanals von seinem der Luftdurchtrittsöffnung der Zwischenwand benachbarten Ende bis zu seinem gegen die Wagenmitte zugewendeten Ende zumindest im wesentlichen konstant, so daß sich über die Länge dieses Kanals keine wesentliche Änderung der Luftstrahlgeschwindigkeit ergibt.

Gemäß einer bevorzugten Ausführungsform der Erfindung ist die Anordnung so getroffen, daß von dem dem Schlitz zugewendeten Rand des Leitbleches ein Abdeckblech nach unten gegen die unterhalb des Leitbleches liegende Auflage zu ragt. Dadurch werden auch aus den Luftdurchtrittsöffnungen der Zwischenwände in den Backraum eintretende Streustrahlen erfaßt, da diese Streustrahlen nun nicht mehr zwischen den von den Auflagen und den Leitblechen gebildeten Kanälen in das Innere des Backraumes zum Backgut gelangen können, sondern durch die nach unten weisenden Abschnitte der Leitbleche in die von diesen begrenzten Kanäle geleitet werden. Im Rahmen der Erfindung ist hiebei das untere Ende des Abdeckbleches im Abstand von der Auflage liegend angeordnet, vorzugsweise im horizontalen Abstand, wobei das Abdeckblech dem Schlitz näher liegt als die Auflage. Das Abdeckblech steht daher nach außen etwas vom Wagen seitlich vor. Es wird hiedurch eine Austrittsöffnung für die aus dem Backraum abströmende Luft gesichert. Besonders günstig ist es, wenn das Abdeckblech über eine Krümmung in das Leitblech übergeht. Dadurch wird sowohl die Einleitung der Warmluft in das Wageninnere begünstigt als auch die Ableitung der verbundenen Warmluft aus dem Wageninneren heraus zu den Absaugöffnungen.

In der Zeichnung ist der Erfindungsgegenstand anhand eines Ausführungsbeispieles schematisch veranschaulicht.

Fig. 1 zeigt einen Vertikalschnitt durch den Backofen normal zur Einschubrichtung des Wagens gesehen;

Fig. 2 ist ein Schnitt nach der Linie II-II der Fig. 1 und

Fig. 3 zeigt im Schnitt ähnlich Fig. 1 die Anordnung des Leitbleches und des Abdeckbleches in größerem Maßstab.

Der Backofen hat ein wärmeisoliertes Gehäuse 1, das durch eine Tür 2 dicht verschließbar ist, die mit einem Sichtfenster 3 versehen ist. Das Gehäuse 1 umschließt einen Backraum 4, in den ein das Backgut 5 auf Auflagen 6, die von Backblechen gebildet sind, tragender Wagen 7 einschiebbar ist. Dieser Wagen 7 ist völlig aus dem Backraum 4 herausschiebbar, also zur Gänze vom Backofen trennbar. Hiezu hat der Wagen 7 ein Fahrgestell 8, dessen Räder durch Schienen 9 am Boden des Backraumes geführt sind, um die Relativlage des Wagens 7 im Backraum 4 zu sichern. Beiderseits des Fahrgestelles 8 sind in Aussparungen 10 des Gehäuses 1 Beschwadungsvorrichtungen 11 untergebracht.

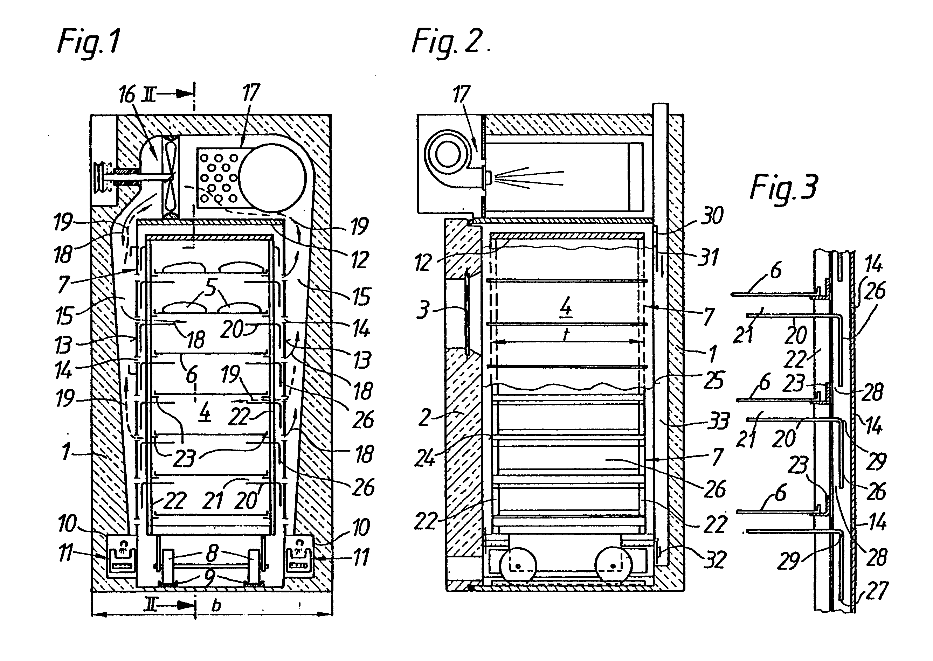

Der eigentliche Backraum 4 ist oben durch eine Deckwand 12 dicht abgeschlossen, von der zu beiden Seiten des Wagens 4 je eine Zwischenwand 13 über die wirksame Höhe des Backraumes durchläuft, d.h. über jene Höhe des Wagens 7, über welche die Auflagen 6 in regelmäßigen Abständen verteilt übereinander angeordnet sind. Jede Zwischenwand 13 hat mehrere horizontale, von Schlitzen 14 gebildete Luftdurchtrittsöffnungen, die über die gesamte, in Einschubrichtung des Wagens 7 gemessene Tiefe t (Fig. 2) des Wagens 7 durchlaufen. Den Schlitzen 14 der beiden Zwischenwände 13 wird alternierend Heißluft über zwei Luftkanäle 15 zugeführt, die durch die Zwischenwände 13 vom eigentlichen Backraum 4 getrennt sind und sich beiderseits des Backraumes 4 über dessen gesamte wirksame Höhe erstrecken. Der horizontale Querschnitt dieser Luftkanäle 15 kann sich von oben nach unten zu verringern (Fig. 1). Den beiden Luftkanälen 15 wird alternierend Luft von oben zugeführt, die durch ein Gebläse 16 gefördert und durch eine Heizvorrichtung 17 beliebiger Art erwärmt wird. Im dargestellten Ausführungsbeispiel ist die Heizvorrichtung als Brennerheizung dargestellt, sie kann jedoch auch eine Elektroheizung usw. sein. Das Gebläse 16 kann ein gewöhnlicher Ventilator sein, günstiger ist jedoch noch ein Querstromgebläse, dessen Rotor so lang ist, daß den zumindest über die Tiefe t des Wagens 7 reichenden Luftkanälen 15 überall gmeichmäßig Luft zugeführt wird. Das Gebläse 16 und die Heizvorrichtung 17 liegen zweckmäßig oberhalb des Backraumes 4 bzw. der Luftkanäle 15, um die Breite b (Fig. 1) der Ofenkonstruktion gering zu halten. Um die wechselweise Versorgung der Luftkanäle 15 mit Warmluft zu erreichen, ist die Drehrichtung des vorzugsweises 16, zweckmäßig automatisch, umsteuerbar. Dadurch ergibt sich abwechselnd eine Luftströmung in Richtung der mit vollen Linien gezeichneten Pfeile 18 bzw. in Richtung der strichliert dargestellten Pfeile 19 (Fig. 1).

Die Schlitze 14 haben nur eine verhältnismäßig geringe Querschnittsfläche, so daß die ihnen über die Luftkanäle 15 zugeführte Heißluft mit hoher Geschwindigkeit aus den Schlitzen 14 in den Backraum 4 eintritt. Um zu gewährleisten, daß diese hohe Luftgeschwindigkeitsströmung nicht wesentlich reduziert wird, bevor die Heißluft auf das Backgut 5 trifft, sind die Schlitze 14 in ihrer Höhenlage so angeordnet, daß jeweils ein Schlitz 14 knapp unterhalb jeder Auflage 6 angeordnet ist. Weiters ist ein Leitblech 20 für jeden Schlitz 14 vorgesehen, welches unterhalb des Schlitzes 14 angeordnet ist und zusammen mit der oberhalb des betreffenden Schlitzes 14 liegenden Auflage 6 einen Kanal 21 begrenzt, durch welchen die aus dem Schlitz 14 austretende Luft gegen die Mitte des Wagens 7 zugeleitet wird. Das Leitblech 20 erstreckt sich horizontal und parallel zur Auflage 6 etwas über ein Fünftel bis ein Drittel, vorzugsweise etwa ein Viertel der Breite des Wagens 7, gemessen in Richtung der Backofenbreite b. Die Leitbleche 20 sind vom Wagen 7 getragen. Hiezu hat der Wagen 7 an den vier Ecken seines Grundrisses Steher 22, die in gleichmäßigen Abständen übereinander paarweise angeordnete Winkelschienen 23 tragen, in welche die Auflagen 6 eingeschoben werden. Die Leitbleche 20 laufen über die gesamte Tiefe t (Fig. 2) des Wagens 7 durch, also von Steher 22 zu Steher 22. Um vorne und hinten, gesehen in Einschubrichtung des Wagens 7, einen Austritt der Heißluft aus den Kanälen 21 zu verhindern, kann die Rückwand 24 des Wagens 7 durch eine Platte abgeschlossen sein und es kann die Vorderseite 25 des Wagens 7 z.B. durch Türen abgeschlossen sein.

Um zu verhindern, daß Randstrahlen der durch die Schlitze 14 eingeblasenen Warmluft nicht durch die Kanäle 21 gegen das Innere des Wagens 7 zu geleitet werden, sondern im übrigen Bereich zwischen den Stehern 22 unkontrolliert in den Innenraum des Wagens 7 gelangen, ist mit jedem Leitblech 20 ein Abdeckblech 26 (Fig. 1, 3) verbunden, welches von jedem Rand des Leitbleches 20 nach unten ausgeht, welcher dem Schlitz 14 zugewendet ist. Dieses Abdeckblech 26 ragt nach unten gegen die unterhalb des betreffenden Leitbleches 20 liegende Auflage 6, und zwar so weit, daß sein unteres Ende 27 (Fig. 3) etwas höher liegt als die darunterliegende Auflage 6 und etwa auf gleicher Höhe wie die Oberkante der die Auflage 6 tragenden Winkelschiene 23. Da die Abdeckbleche 26 etwas außerhalb der Steher 22 liegen, verbleibt zwischen der Oberkante jeder Winkelschiene 23 und dem unteren Ende 27 des benachbarten Abdeckbleches 26 ein über die Tiefe t des Wagens 7 durchlaufender Spalt 28, durch welchen die aus dem Inneren des Wagens 7 abzuführende Luft ungehindert zum Absaugeschlitz 14 gelangen kann. Normalerweise verläuft das Abdeckblech 26 senkrecht nach unten, es kann jedoch auch geringfügig schräg gestellt werden, wodurch sich die Breite des Spaltes 28 einstellen läßt. Zweckmäßig geht das Abdeckblech 26 über eine Krümmung 29 in das Leitblech 20 über, so daß die beiden Bleche 20, 26 leicht aus einem Stück gebogen werden können und sich eine gute Luftführung ergibt.

An der Rückwand des Backofens kann eine Schwadenabzugsöffnung 30 (Fig. 2) vorgesehen sein, die durch einen in Richtung des Doppelpfeiles höhenverstellbaren Schieber 31, z.B. mittels eines Seilzuges, verschließbar ist. Ferner kann eine durch eine Klappe verschließbare Schwadenüberdrucköffnung 32 unten an der Rückwand des Backofens vorgesehen sein. Die beiden Öffnungen 30, 32 erlauben den Abzug von Schwaden in einen in der Rückwand des Gehäuses 1 angeordneten Schwadenabfuhrkanal 33.

## Patentansprüche

1. Backofen mit einem Backraum, in den ein das Backgut auf Auflagen tragender Wagen einschiebbar ist, der während des Backprozesses stillsteht, wobei sich beiderseits des Backraumes Luftkanäle von oben nach unten über die Höhe des Backraumes erstrecken, die durch Zwischenwände vom Backraum getrennt sind, in denen von horizontalen Schlitzen gebildete Luftdurchtrittsöffnungen vorgesehen sind, durch die erwärmte Luft mittels eines Gebläses in alternierender Richtung in den Backraum eingeblasen wird, dadurch gekennzeichnet, daß in der Einschubstellung des Wagens (7) an die Schlitze (14) diesen zugeordnete Kanäle (21) am Wagen (7) anschließen, die von zusätzlich zu den Auflagen (6) vorgesehenen Leitblechen (20) begrenzt sind, durch welche Kanäle (21) die aus den Schlitzen (14) in den Backraum (4) eingeblasene Luft gegen die Wagenmitte zu und durch die gegen die Wagenmitte zu gewendeten Enden der Kanäle (21) auf das Backgut geleitet wird. (geändert)

2. Backofen nach Anspruch 1, dadurch gekennzeichnet, daß jeweils ein Schlitz (14) knapp unterhalb einer Auflage (6) angeordnet ist und daß der Wagen (7) unterhalb jedes Schlitzes (14) ein liegendes Leitblech (20) trägt, welches zusammen mit der über ihm liegenden Auflage (6) einen der Kanäle (21) begrenzt.

3. Backofen nach Anspruch 2, dadurch gekennzeichnet, daß sich das Leitblech (20) und die Auflage (6) in Strahlrichtung des aus dem Schlitz (14) austretenden Luftstrahles parallel zueinander und horizontal erstrecken.

4. Backofen nach Anspruch 2 oder 3, dadurch gekennzeichnet, daß von dem dem Schlitz (14) zugewendeten Rand des Leitbleches (20) ein Abdeckblech (26) nach unten gegen die unterhalb des Leitbleches (20) liegende Auflage (6) zu ragt.

5. Backofen nach Anspruch 4, dadurch gekennzeichnet, daß das untere Ende (27) des Abdeckbleches (26) im Abstand von der Auflage (6) liegt, wobei das Abdeckblech (26) dem Schlitz, in horizontaler Richtung gemessen, näher liegt als die Auflage (6).

6. Backofen nach Anspruch 5, dadurch gekennzeichnet, daß das untere Ende (27) des Abdeckbleches (26) im horizontalen Abstand von der Auflage (6) liegt.

7. Backofen nach Anspruch 4, 5 oder 6, dadurch gekennzeichnet, daß das Abdeckblech (26) über eine Krümmung (29) in das Leitblech (20) übergeht.

8. Backofen nach einem der Ansprüche 1 bis 7, dadurch gekennzeichnet, daß die Schlitze (14) über die in Einschubrichtung des Wagens (7) gemessene Tiefe der Auflagen (6) durchlaufen.

9. Backofen nach einem der Ansprüche 1 bis 8, dadurch gekennzeichnet, daß sich das Leitblech (20) horizontal und parallel zur Auflage (6) über ein Fünftel bis ein Drittel, vorzugsweise etwa ein Viertel der Breite des Wagens (7), gemessen in Richtung der Backofenbreite (b), erstreckt. (neu)

## Claims

1. Baking oven with a baking chamber, into which a carriage carrying the baking product on supports is able to be pushed, said carriage standing still during the baking process, whereby on both sides of the baking chambers air channels extend from the top to the bottom along the height of the baking chamber, said channels being separated from the baking chamber by partitions, in which partitions air passage openings formed by horizontal slots are provided, through which openings heated air is blown in alternating directions into the baking chamber, by means of a blower, characterised in that, in the slide-in position of the carriage (7), channels (21) on the carriage (7), which are allocated to slots (14) connect with the slots (14), said channels being defined by deflectors (20) provided in addition to the supports (6), through which channels (21) the air blown from the slots (14) into the baking chamber (4) is guided towards the carriage middle and through the ends of the channels (21) turned towards the carriage middle onto the baking product.

2. Baking oven according to claim 1, characterised in that in each case a slot (14) is arranged just below a support (6) and that the carriage (7) carries below each slot (14) a horizontal deflector (20), which, together with the support (6) lying above it, defines one of the channels (21).

3. Baking oven according to claim 2, characterised in that the deflector (20) and the support (6) extend horizontally and parallel to each other in the direction of the radiation of the air jet emanating from the slot (14).

4. Baking oven according to claim 2 or 3, characterised in that a cover plate (26) projects from the edge of the deflector (20) facing the slot, downwards towards the support (6) lying below the deflector (20).

5. Baking oven according to claim 4, characterised in that the lower end (27) of the cover plate (26) lies at a distance from the support (6), whereby the cover plate (26) lies closer to the slot, in the horizontal direction, than the support (6).

6. Baking oven according to claim 5, characterised in that the lower end (27) of the cover plate (26) lies at a horizontal distance from the support (6).

7. Baking oven according to claim 4, 5 or 6, characterised in that the cover plate (26) passes over a bend (29) into the deflector (20).

8. Baking oven according to one of claims 1 to 7, characterised in that the slots (14) run through the measured depth of the supports (6) in the slide-in direction of the carriage (7).

9. Baking oven according to one of claims 1 to 8, characterised in that the deflector (20) extends horizontally and parallel to the support (6) over a fifth to a third, preferably approximately a quater of the width of the carriage (7), measured in the direction of the width of the baking oven (b).

## Revendications

1. Four de cuisson avec une chambre de cuisson, dans laquelle un chariot porteur du produit de cuisson disposé sur des supports peut être introduit, le chariot étant immobilisé durant l'opération de cuisson, des canaux d'air s'étendant de haut en bas des deux côtés de la chambre de cuisson et sur la hauteur de cette chambre de cuisson, ces canaux d'air étant séparés de la chambre de cuisson par des parois intermédiaires dans lesquels sont prévues des ouvertures de passage d'air constituées par des fentes horizontales, à travers lesquelles l'air chauffé est au moyen d'un ventilateur soufflé en direction alternative dans la chambre de cuisson, le dispositif étant caractérisé par le fait que dans la position rentrée du chariot (7), des canaux (21) sur le chariot (7), associés aux fentes (14), se raccordent à ces fentes, ces canaux étant délimités par des plaques directrices ou plaques chicanes (20) prévus complémentairement aux supports (6), l'air soufflé dans la chambre de cuisson (4) à partir des fentes (14) étant dirigé vers le centre du chariot et sur le produit de cuisson par l'intermédiaire des canaux (21) et des extrémités desdits canaux (21) orientées en direction du centre de chariot.

2. Four de cuisson selon la revendication 1, caractérisé en ce qu'une fente (14) est disposée juste en-dessous de chacun des supports (6), et en ce que le chariot (7) comporte en-dessous de chaque fente (14) une plaque directrice ou plaque chicane établie horizontale (20), laquelle, conjointement avec le support (6) établi horizontal au-dessus de cette plaque directrice ou chicane, délimite un des canaux (21).

3. Four de cuisson selon la revendication 2, caractérisé en ce que la plaque directrice ou plaque chicane (20) et le support (6) s'étendent parallèlement l'un par rapport à l'autre et horizontalement dans le sens de la projection du jet d'air sortant de la fente (14).

4. Four de cuisson selon la revendication 2 ou 3, caractérisé en ce qu'une plaque de couverture (26), à partir du bord de la plaque directrice (20) orienté vers la fente (14), dépasse en direction du bas vers le support (6) établi en dessous de la plaque directrice (20).

5. Four de cuisson selon la revendication 4, caractérisé en ce que l'extrémité inférieure (27) de la plaque de couverture (26) est établie distante par rapport au support (6), la plaque de couverture (26), en mesurant dans la direction horizontale, se situant plus près de la fente que le support (6).

6. Four de cuisson selon la revendication 5, caractérisé en ce que l'extrémité inférieure (27) de la plaque de couverture (26) est établie horizontalement distante du support (6).

7. Four de cuisson selon la revendication 4, 5 ou 6, caractérisé en ce que la plaque de couverture (26) s'étend au-dessus et au-delà d'un coude (29) dans la plaque directrice ou chicane (20).

8. Four de cuisson selon une des revendications 1 à 7, caractérisé en ce que les fentes (14) s'étendent sur la profondeur des supports (6) mesurée dans la direction d'introduction du chariot (7).

9. Four de cuisson selon une des revendications 1 à 8, caractérisé en ce que la plaque directrice ou plaque chicane (20) s'étend horizontalement et parallèlement par rapport au support (6) sur un cinquième jusqu'à un tiers, et de préférence sur environ un quart de la largeur du chariot (7) mesurée dans le sens de la largeur de four (b).

Fig.1

Fig.2.

Fig.3